# EUROPÄISCHE PATENTANMELDUNG

(11) **EP 0 910 977 A1**
(43) Veröffentlichungstag der Anmeldung: **28.04.1999**
(21) Anmeldenummer: 98116444.5
(22) Anmeldetag: 31.08.1998
(51) Int. Cl.: A47J 31/06, A47J 31/44

(54) **Filtervorrichtung zur Herstellung von Brühgetränken aus Kafee oder Tee**

(30) Priorität: 22.10.1997 DE 29718786 U
(71) Anmelder: MELITTA HAUSHALTSPRODUKTE GmbH & Co. Kommanditgesellschaft, D-32427 Minden (DE)
(72) Erfinder: Wittenschläger, Lutz, Dr., 32479 Hille (DE)
(74) Vertreter: Stracke, Alexander, Dipl.-Ing.

(57) **Zusammenfassung**

Gegenstand der Erfindung ist eine Filtervorrichtung zur Herstellung von Brühgetränken aus Kaffee oder Tee, die für eine Menge von ein bis zwei Tassen konzipiert ist. Die Filtervorrichtung besteht im wesentlichen aus einem Außenbehälter (12) und aus einem darin eingesetzten Innenbehälter (13). Der Außenbehälter (12) ist ebenso wie der Innenbehälter (13) etwa zylinderförmig ausgebildet.

Der Außenbehälter (12) ist im Bereich seines oberen Randes mit einer Stützeinrichtung versehen und über diese Stützeinrichtung in einem für größere Mengen eines Brühgetränkes ausgelegten, handelsüblichen Filtergefäß (10) abgestützt.

Die erfindungsgemäße Filtervorrichtung stellt sozusagen einen Adapter dar, der in ein größeres Filtergefäß eingesetzt werden kann, beispielsweise auch in ein Filtergefäß einer handelsüblichen Kaffee- oder Teemaschine. Dadurch kann das Heißwasser-Brühsystem einer derartigen Maschine genutzt werden.

## Beschreibung

Die vorliegende Erfindung betrifft eine für eine Menge von ein bis zwei Tassen konzipierte Filtervorrichtung zur Herstellung von Brühgetränken aus Kaffee oder Tee, bestehend aus einem Außenbehälter mit einem flüssigkeitsdurchlässigen Boden, welcher als Dauerfilter oder als Auflager für ein Filterpapier ausgebildet ist, und aus einem Innenbehälter dessen Boden ebenfalls flüssigkeitsdurchlässig ist und welcher derart in den Innenbehälter eingesetzt ist, daß zwischen den beiden Böden von Innenbehäler und Außenbehälter ein Raum zur Aufnahme von Kaffeemehl oder Tee gebildet ist.

Das Zubereiten von Brühgetränken aus Kaffee oder Tee mit Hilfe von Haushalts-Kaffee- oder Teemaschinen ist solange völlig unproblematisch, wie größere Mengen gebrüht werden.

Sollen hingegen nur geringe Mengen wie beispielsweise eine oder zwei Tassen gebrüht werden, ergibt sich eine deutlichere Verringerung des erzielbaren Geschmacksergebnisses.

Dies liegt insbesondere daran, daß handelsübliche Haushalts-Kaffee- oder Teemaschinen mit Filtervorrichtungen ausgestattet sind, die für eine Zubereitung von etwa 8 - 12 Tassen ausgelegt sind.

Das vorher Gesagte gilt ebenfalls für das Herstellen von Brühgetränken von Hand, soweit eine Filtervorrichtung mit entsprechend großem Fassungsvermnögen zum Einsatz kommt.

Die Ursachen für das relativ schlechte Geschmacksergebnis sind hauptsächlich in den niedrigeren Extraktionstemperaturen durch Abkühlungseffekte des Brühwassers an den Wandungen der Filtervorrichtung und im Aufschwimmen des Kaffeemehls oder des Tees und der damit verbundenen ungleichmäßigen und zum Teil unvollständigen Benetzung und damit auch der Extraktion selbst zu sehen.

Es gibt selbstverständlich auch Kaffee- oder Teemaschinen, die schon konstruktiv auf die Zubereitung kleinerer Mengen von Brühgetränken ausgelegt sind. Zwar treten hier die vorstehend geschildeten Nachteile nicht in entsprechend großem Maße auf, nachteilig für einen Verbraucher ist allerdings, daß gegebenenfalls zwei unterschiedlich dimensionierte Kaffee- oder Teemaschinen angeschafft und im Küchenbereich bereitgestellt werden müssen.

Es ist eine Filtervorrichtung der gattungsgemäßen Art zur Herstellung von relativ kleinen Mengen von Brühgetränken bekannt, die allerdings nur ein Aufbrühen von Hand ermöglicht. Dabei muß die Filtervorichtung unmittelbar auf ein entsprechend dimensioniertes Aufnahmegefäß aufgesetzt und das Brühwasser von Hand in die Filtervorrichtung eingegossen werden, was heute allgemein als zeitraubend und umständlich empfunden wird.

Der vorliegenden Erfindung liegt die Aufgabe zugrunde, eine Filtervorrichtung der gattungsgmäßen Art dahingehend weiter zu entwickeln, daß deren Verwendung erheblich vereinfacht wird, insbesondere soll erreicht werden, daß die erfindungsgemäße Filtervorrichtung in handelsüblichen Haushalts-Kaffee- oder Teemaschinen eingesetzt werden kann.

Diese Aufgabe wird erfindungsgemäß dadurch gelöst, daß der Außenbehälter im Bereich seines oberen Randes mit einer Stützeinrichtung zur Abstützung in einem für größere Mengen eines Brühgetränkes ausgelegten, handelsüblichen Filtergefäßes ausgestattet ist.

Die erfindungsgemäße Filtervorrichtung ist sozusagen als Adapter gestaltet, der in ein Filtergefäß für größere Brühmengen eingesetzt werden kann. Dies gilt dabei selbstverständlich auch für den Einsatz in Filtergefäßen von handelsüblichen Kaffee- oder Teemaschinen zur Zubereitung größerer Mengen. Wird der Adapter in ein Filtergefäß einer handelsüblichen Kaffee- oder Teemaschine eingesetzt, kann das Heißwasser-Brühsystem dieser Maschine genutzt und dennoch ein sehr gutes Geschmacksergebnis erzielt werden, da das Brühwasser aufgrund der relativ kleinen Abmessungen der erfindungsgemäßen Filtervorrichtung weniger abkühlt und das Kaffeemehl oder der Tee während des Brühvorganges nicht aufschwimmen oder ausweichen kann und somit vollständig vom Brühwasser durchdrungen wird.

Weitere Merkmale der Erfindung sind Gegenstand von Unteransprüchen.

Ausführungsbeispiele der Erfindung sind in den beigefügten Zeichnungen dargestellt und werden im folgenden näher beschrieben.

Es zeigen:
- Figur 1: eine perspektivische Darstellung einer in ein großvolumiges Filtergefäß eingesetzten erfindungsgemäßen Filtervorrichtung,
- Figur 2: eine perspektivische Darstellung einer Filtervorrichtung nach einem weiteren Ausführungsbeispiel der Erfindung mit angedeutetem, großvolumigen Filtergefäß.

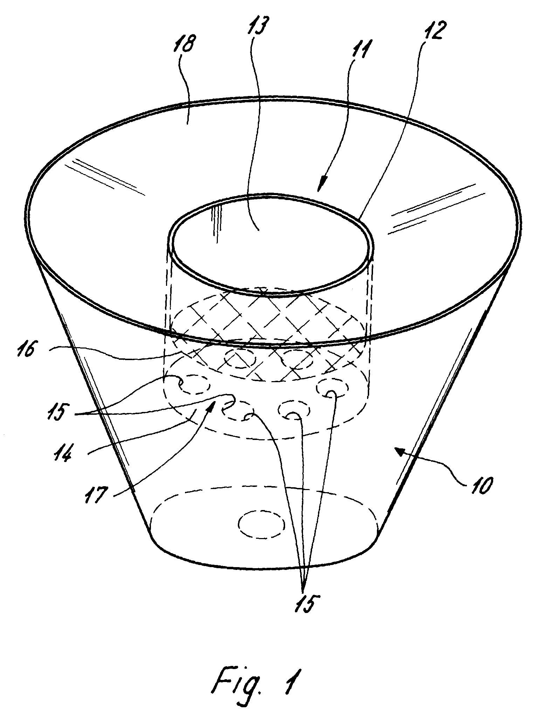

In Figur 1 ist mit dem Bezugszeichen 10 ein Filtergefäß einer handelsüblichen Haushalts-Kaffee- oder Teemaschine gezeigt, welches für ein Brühvolumen von beispielsweise 8 - 12 Tassen ausgelegt ist.

In dieses Filtergefäß 10 ist eine insgesamt mit dem Bezugszeichen 11 bezeichnete, erfindungsgemäße Filtervorrichtung für kleinere Brühmengen sozusagen als Adapter eingesetzt.

Diese für eine Menge von ein bis zwei Tassen konzipierte Filtervorrichtung 11 besteht im wesentlichen aus einem Außenbehälter 12 und einem in diesen Außenbehälter 12 eingesetzten Innenbehälter 13.

Der Außenbehäler 12 ist ebenso wie der Innenbehälter 13 etwa zylidnerförmig ausgebildet.

Der Boden 14 des Außenbehälters 12 ist mit einer Vielzahl von Löchern 15 versehen und insoweit flüssigkeitsdurchlässig. Im dargestellten Ausführungsbeispiel sind die Löcher 15 relativ groß ausgeführt, so daß der Boden 14 in diesem Falle als Auflager für ein Filterpapier ausgebildet ist. Der Boden 14 des Außenbehälters 12 kann selbstverständlich auch als Dauerfilter auf einer flüssigkeitsdurchlässigen Metallfolie hergestellt sein.

Der Boden 16 des Innenbehälters 13 ist ebenfalls gelocht und dadurch flüssigkeitsdurchlässig.

Der Abstand zwischen dem Boden 14 des Außenbehälters 12 und dem Boden 16 des Innenbehälters 13 ist so gewählt, daß zwischen diesen beiden Böden 14 und 16 ein Raum 17 zur Aufnahme von Kaffeemehl oder Tee gebildet ist.

Der Außenbehälter 12 ist im Bereich seines oberen Randes mit einer Stützeinrichtung versehen, im Falle des Ausführungsbeispieles gemäß Figur 1 besteht diese Stützeinrichtung aus einem an den Außenbehälter 12 angeformten, umlaufenden Flansch 18, der nach außen hin konisch ansteigt. Über diesen Flansch 18 wird die gesamte Filtervorrichtung 11 im deutlich größeren Filtergefäß 10 abgestützt, ohne daß die Filtervorrichtung 11 über die obere Begrenzungsebene des Filtergefäßes 10 hinaus vorsteht.

Somit kann das mit der Filtervorrichtung 11 versehene Filtergefäß 10 ohne weiteres innerhalb einer Kaffee- oder Teemaschine mit einem automatischen Brühsystem eingesetzt werden.

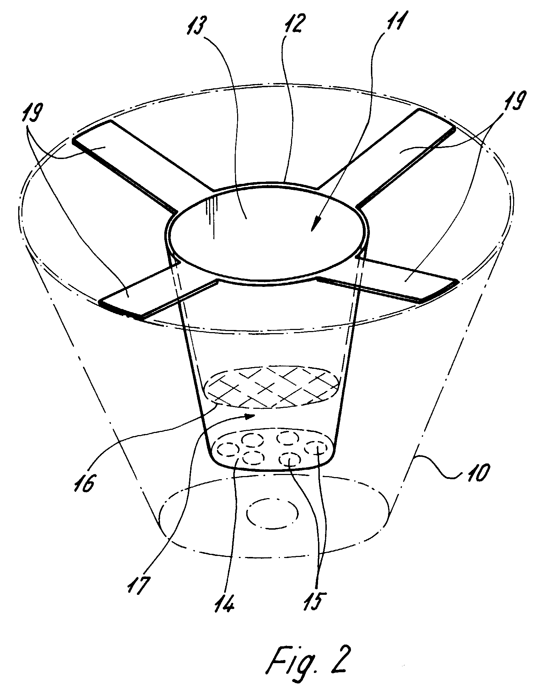

Gleiches gilt für das in Figur 2 dargestellte Ausführungsbeispiel der Erfindung.

Die in Figur 2 dargestellte Filtervorrichtung 11 unterscheidet sich vom Ausführungsbeispiel gemäß Figur 1 lediglich dadurch, daß die Stützeinrichtung aus mehreren, am oberen Rand des Außenbehälters 12 angeformten, radial nach außen abstehenden Tragarmen 19 besteht. Außerdem ist in Figur 2 angedeutet, daß der Außenbehälter 12 - und dementsprechend auch der Innenbehälter 13 - zur jeweiligen Bodenseite hin verjüngt ausgebildet sein können.

Ansonsten ist der Aufbau der Filtervorrichtung 11 und deren Wirkungsweise die gleiche wie beim Ausführungsbeispiel gemäß Figur 1, so daß hier auf unnötige Wiederholungen verzichtet werden kann.

Besonders wirtschaftlich ist es, das Außengefäß 12 und das Innengefäß 13 aus Kunststoff herzustellen.

## Patentansprüche

1. Für eine Menge von ein bis zwei Tassen konzipierte Filtervorrichtung zur Herstellung von Brühgetränken aus Kaffee oder Tee, bestehend aus einem Außenbehälter mit einem flüssigkeitsdurchlässigen Boden, welcher als Dauerfilter oder als Auflager für ein Filterpapier ausgebildet ist, und aus einem Innenbehälter, dessen Boden ebenfalls flüssigkeitsdurchlässig ist, welcher derart in den Innenbehälter eingesetzt ist, daß zwischen den beiden Böden von Innenbehälter und Außenbehälter ein Raum zur Aufnahme von Kaffeemehl oder Tee gebildet ist, **dadurch gekennzeichnet**, **daß** der Außenbehälter (12) im Bereich seines oberen Randes mit einer Stützeinrichtung zur Abstützung in einem für größere Mengen eines Brühgetränkes ausgelegten, handelsüblichen Filtergefäßes ausgestattet ist.

2. Filtervorrichtung nach Anspruch 1, **dadurch gekennzeichnet, daß** die Stützeinrichtung aus einem umlaufenden, nach außen konisch ansteigenden Flansch (18) besteht.

3. Filtervorrichtung nach Anspruch 1, **dadurch gekennzeichnet**, **daß** die Stützeinrichtung aus mindestens zwei radial vom Außenbehälter (12) abstehenden Tragarmen (19) besteht.

4. Filtervorrichtung nach einem oder mehreren der vorhergehenden Ansprüche, **dadurch gekennzeichnet**, **daß** der Außenbehälter (12) und/oder der Innenbehälter (13) aus Kunststoff hergestellt ist bzw. sind.

5. Filtervorrichtung nach einem oder mehreren der vorhergehenen Ansprüche, **dadurch gekennzeichnet, daß** der Außenbehälter (12) und der Innenbehälter (13) zylinderförmig ausgebildet sind.

6. Filtervorrichtung nach einem oder mehreren der Ansprüche 1 - 4, **dadurch gekennzeichnet, daß** der Außenbehälter (12) und der Innenbehälter (13) zur Bodenseite hin verjüngt ausgebildet sind.
